(19) **Europäisches Patentamt / European Patent Office / Office européen des brevets**

(11) **EP 0 921 580 B1**

(12) **EUROPEAN PATENT SPECIFICATION**

(45) Date of publication and mention of the grant of the patent:
**22.08.2007 Bulletin 2007/34**

(51) Int Cl.:
**H01M 2/16** *(2006.01)*　　**H01M 10/34** *(2006.01)*

(21) Application number: **98309538.1**

(22) Date of filing: **23.11.1998**

(54) **Manufacturing method of alkali storage cell**

Herstellungsverfahren von alkalischer Speicherzelle

Procédé de fabrication d'un accumulateur alcalin

(84) Designated Contracting States:
**DE FR GB**

(30) Priority: **25.11.1997 JP 32291197**

(43) Date of publication of application:
**09.06.1999 Bulletin 1999/23**

(73) Proprietor: **SANYO ELECTRIC CO., LTD.**
**Moriguchi-shi, Osaka 570-0083 (JP)**

(72) Inventors:
• **Takee, Masao**
**Itano-gun,**
**Tokushima 772-0220 (JP)**
• **Nagae, Teruhito**
**Tokushima-shi,**
**Tokushima 779-3124 (JP)**

(74) Representative: **Barnfather, Karl Jon et al**
**Withers & Rogers LLP**
**Goldings House,**
**2 Hays Lane**
**London SE1 2HW (GB)**

(56) References cited:
**EP-A- 0 680 107**　　**EP-A- 0 795 916**
**EP-A- 0 834 938**　　**EP-A- 0 848 436**

• PATENT ABSTRACTS OF JAPAN vol. 095, no. 009, 31 October 1995 & JP 07 147154 A (JAPAN VILENE CO LTD), 6 June 1995
• PATENT ABSTRACTS OF JAPAN vol. 095, no. 010, 30 November 1995 & JP 07 192714 A (HIROYUKI KANAI), 28 July 1995 -& DATABASE WPI Derwent Publications Ltd., London, GB; AN 95-296889 XP002096678 & JP 07 192714 A (KANAI H.), 28 July 1995
• PATENT ABSTRACTS OF JAPAN vol. 097, no. 003, 31 March 1997 & JP 08 311765 A (MITSUBISHI CHEM CORP), 26 November 1996
• PATENT ABSTRACTS OF JAPAN vol. 095, no. 004, 31 May 1995 -& JP 07 029562 A (TOSHIBA BATTERY CO LTD), 31 January 1995
• PATENT ABSTRACTS OF JAPAN vol. 096, no. 006, 28 June 1996 & JP 08 035192 A (DAIFUKU SEISHI KK), 6 February 1996

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

(1) Field of the Invention

This invention relates to a method of manufacturing an alkali storage cell such as a nickel-hydrogen storage cell, a nickel-cadmium storage cell, a nickel-zinc storage cell and the like, and more particularly to a method of manufacturing an alkali storage cell having an improved separator.

(2) Description of the Prior Arts

A separator for use in alkali storage cells is generally required to have insulation quality between a positive electrode and negative electrode, a hydrophilicity for retaining electrolyte, and gas permeability. In addition to these, resistance to degradation by high concentration alkaline electrolyte is also required. For this reason, there has been widely employed a separator in which a non-woven fabric made of fibers composed mainly of polyolefin resin is treated with an appropriate hydrophilizting treatment.

For example, Japanese Unexamined Patent Publication No. 07-29562 discloses an alkali secondary battery comprising a positive electrode, a negative electrode, an alkali electrolyte, and a separator interposed between the positive and negative electrodes, and the separator is formed with a nonwoven fabric treated with a corona discharge treatment, which is made of polyolefin resin fibers to which a hydrophilic synthetic pulp is added.

In order to enhance the insulation quality between a positive and negative electrodes, it is effective to increase a basis weight (weight per unit area) of the nonwoven fabric. However, in order to increase a cell capacity, it is preferable that an occupied volume of the separator in the cell be made as small as possible by making smaller the basis weight of the separator. In view of this, in order to satisfy both the requirements, a small basis weight and a high insulation quality, it is effective that a separator be made to have as large a density as possible in a thickness adjusting process of the separator by being treated with calendering and the like. However, when the separator is made to have a large density in a thickness adjusting process, the volume of gap in the separator is reduced and thereby an electrolyte retention characteristic and gas permeability are deteriorated, resulting in a large increase in an internal pressure of the cell. As a result, a safety valve provided in the cell is activated and the electrolyte discharged out of the cell can, and consequently it leads to such a drawback that the cycle life is very much deteriorated.

SUMMARY OF THE INVENTION

In view of the above, it is an object of the present invention to provide a method of manufacturing an alkali storage cell capable of suppressing the deterioration in electrolyte retention, strength of the separator, and gas permeability even when the separator has a reduced thickness and smaller basis weight.

It is another object of the present invention to provide a method of manufacturing an alkali storage cell capable of reducing a short circuit occurrence rate by suppressing the deterioration in insulation quality even if a thickness and basis weight of the separator is reduced.

It is further another object of the present invention to provide a method of manufacturing an alkali storage cell having a large capacity by reducing the thickness of the separator.

These and other objects are accomplished by a method of manufacturing an alkali storage cell comprising a separator in which a nonwoven fabric composed of fibers consisting essentially of a polyolefin resin is treated with a hydrophilizing treatment, comprising the steps of:

treating said non-woven fabric with a hydrophilizing treatment;and adjusting a thickness of said non-woven fabric at a temperature in the range 50 °C to 70 ° C after said step of treating said non-woven fabric with a hydrophilizing treatment so that an apparent density of said separator represented by the following expression

$$\text{Apparent density} = \text{Separator basis weight} \div \text{Separator thickness,}$$

results in not less than 0.40g/cm$^3$.

The reason for accomplishing the above objects is as follows.

The fibers in the separator are provided with plenty of hydrophilicity by being given such a treatment, and thereby it is made possible to suppress an increase in the internal pressure of the cell without deteriorating the insulation quality even if the separator has a low basis weight (40- 60 g/m$^2$).

A method of manufacturing an alkali storage cell according to the present invention may further comprise a step of treating the nonwoven fabric with a water jet entanglement prior to the step of treating the nonwoven fabric with a hydrophilizing treatment, and in addition, the fibers comprised in the separator may comprise at least two types of fibers and at least one type of the fibers may comprise split fibers with a fiber diameter after the water jet entanglement being not more than 10 $\mu$m.

According to the above method, by treating the split fibers having a small fiber diameter with the water jet entanglement, the degree of entanglement of the fibers is increased, and it is thereby made possible to increase the insulation quality. Moreover, it is more effective that the hydrophilizing treatment for such a nonwoven fabric is carried out prior to the thickness adjusting process. In other words, for a nonwoven fabric with a large fiber surface area and a large density, it is very effective that the hydrophilizing treatment be carried out prior to the thickness adjusting process in order to suppress the increase in an internal pressure of the cell.

More specifically, the split fibers having an average fiber diameter of 15- 20 $\mu$m when not split are used for this method. By applying highly pressurized water to such fibers, the fibers are split to have an average fiber diameter of approximately 4- 10 $\mu$m, and the fibers thus split are entangled each other. It is thereby made possible to obtain a separator having a large strength.

A method of manufacturing an alkali storage cell according to the present invention may comprise a construction in which the aforementioned split fibers may be composed of a splittable conjugate fiber in which two types of polymer resins are radially arranged.

Further, a method of manufacturing an alkali storage cell according to the present invention may comprise a construction in which the fibers may be composed of split fibers and heat-bonded fibers.

When heat-bonded fibers are contained in the fibers that constitutes the separator, as in the above, the insulation quality can be thereby increased, but at the same time, a conspicuous deterioration in gas permeability can be induced particularly in the thickness adjusting process. Therefore, in the case where heat-bonded fibers are employed too, it is preferable that the hydrophilizing treatment be carried out prior to the thickness adjusting process

Still further, a method of manufacturing an alkali storage cell according to the present invention may comprise a construction in which said step of treating said nonwoven fabric with a hydrophilizing treatment comprises a step of treating said nonwoven fabric with a corona discharge treatment.

When the hydrophilizing treatment comprises a corona discharge treatment, since the corona discharge treatment is generally a weak treatment and the fibers are therefore not much damaged in comparison with a sulfonating treatment and the like, it has such an advantage that a short circuit resistance of the separator is not much deteriorated by the treatment. However, the degree of hydrophilization given to the subjected fabric is also rendered small, and as a result, a sufficient degree of hydrophilization cannot be attained if the corona discharge treatment is carried out after the thickness adjusting process, particularly in the case where the fabric is made to have a large fiber density by the thickness adjusting process. In view of this, by carrying out as the hydrophilizing treatment the corona discharge treatment prior to the thickness adjusting process, a sufficient effect of hydrophilization can be obtained without deteriorating the short circuit resistance characteristic.

In addition, a positive electrode for use in an alkali storage cell manufactured according to the present invention may be composed of a nickel electrode, and the negative electrode may be selected from a group consisting of a hydrogen storage alloy electrode, a cadmium electrode, and a zinc electrode.

In addition, hydrogen absorbing alloy powder in the hydrogen storage alloy electrode for use in the present invention may be selected from the group consisting of rare-earth element based hydrogen-absorbing alloy powder, Zr-Ni based hydrogen-absorbing alloy powder, Ti-Fe based hydrogen-absorbing alloy powder, Zr-Mn based hydrogen-absorbing alloy powder, Ti-Mn based hydrogen-absorbing alloy powder, and Mg-Ni based hydrogen-absorbing alloy powder.

In addition, the hydrogen absorbing alloy powder in the hydrogen storage alloy electrode for use in the present invention may comprise a hydrogen-absorbing alloy having a CaCu5 type crystal structure expressed by the general formula MmNiaCobAlcMnd, where a>0, b>0, c>0, d≧0, and 4,4≦a+b+c+d≦5,4.

BRIEF DESCRIPTION OF THE DRAWING

For a more complete understanding of the present invention, and the advantages thereof, reference is now made to the following descriptions taken in conjunction with the accompanying drawing, in which;

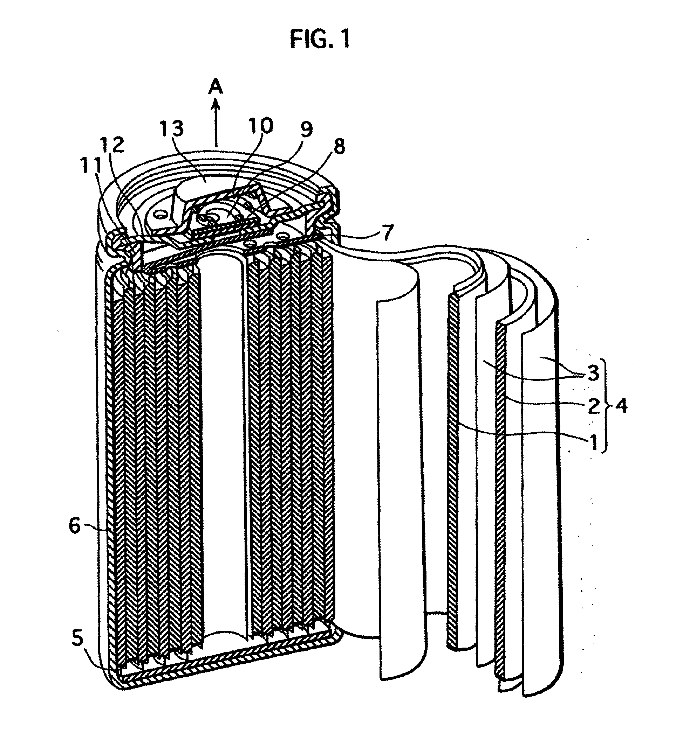

Fig. 1 is a cross-sectional perspective view of a nickel-hydrogen cell produced in accordance with the present invention.

DESCRIPTION OF THE PREFERRED EMBODIMENTS

Now referring to Fig. 1, there is detailed the examples according to the present invention in the following.

Example 1

A positive electrode 1 is a non-sintered type nickel electrode, and a negative electrode 2 is a hydrogen absorbing alloy electrode. A separator 3 is interposed between the positive electrode 1 and the negative electrode 2. In an electrode assembly 4, the positive electrode 1 and the negative electrode 2 and the separator 3 are spirally wound together, and the electrode assembly 4 is enclosed in a cell can 6. An electrolyte consisting of 30% KOH aqueous solution is filled in the cell can 6.

At the upper part of the cell can 6, a sealing plate 12, which has an opening in its central part, is provided with a gasket 11 disposed therebetween, and a positive electrode terminal 13 is attached to the sealing plate 12. On the sealing plate 12, a valve plate 8 and a holding plate 9 are provided, and the holding plate 9 is pressed with a spring 10. The positive electrode 1 is connected to the positive electrode terminal 13 via a positive electrode current collector 7 and the aforementioned sealing plate 12. The negative electrode 2 is connected to the base part of the cell can 6 via a negative electrode current collector 5.

The aforementioned valve plate 8, holding plate 9, coiled spring 10 are so constructed that an internal gas of the cell is released in the atmosphere by being pressed in the direction shown by the arrow A in the case where an internal pressure of the cell is increased.

The cell having a construction described above was produced according to the following description.

Preparation of positive electrode

An active material slurry was prepared by mixing 100 parts by weight of an active material powder consisting essentially of nickel hydroxide, and 50 parts by weight of an aqueous solution in which 0.2 parts by weight of hydroxypropylcellulose was dissolved. This active material slurry was impregnated into a formed nickel having a porosity of 95 %. The slurry-impregnated material was dried and thereafter metal-rolled, and a positive electrode 1, a non-sintered type nickel electrode, was thus prepared.

Preparation of negative electrode

A hydrogen absorbing alloy powder was prepared with the use of a high-frequency induction furnace, and a binder consisting of polytetrafluoroethylene and the like, and an appropriate amount of water were added to the powder. Thereafter, a hydrogen absorbing alloy paste was prepared by mixing the resulting material. The hydrogen absorbing alloy paste was applied onto both surfaces of a punched metal, and the punched metal with the hydrogen absorbing alloy paste was pressed. A negative electrode 2, a hydrogen absorbing alloy electrode, was thus prepared.

Preparation of separator

First, 50 parts by weight of splittable conjugate fibers, 20 parts by weight of heat-bonded fibers with a sheath-core structure, and 30 parts by weight of polypropylene fibers were mixed together. The splittable conjugate fibers had a fiber diameter of approximately 15 $\mu$m, and had such a construction that two types of polymer resins, one type being polypropylene and the other polyethylene, were radially arranged in the fiber. The heat-bonded fibers had a fiber diameter of approximately 15 $\mu$m, and had such a sheath-core structure that polypropylene was a core of the fiber and polyethylene was arranged on the surface of the core. The polypropylene fibers had a fiber diameter of approximately 10 $\mu$m. Thereafter, the mixed fibers were three-dimensionally collected by an ordinary dry type method, then made into a sheet-like shape so that a basis weight results in 56 g/m$^2$. Then, the sheet-shaped fibers were heated, and the polyethylene, being a polymer resin with a low melting point, was thereby fused, and consequently the contact points of the fibers were thermally fused and bonded together so as to form a nonwoven fabric. The nonwoven fabric thus prepared was subjected to a water jet entanglement so that the splittable conjugate fibers were split into thinner fibers, and that the resulting fibers had a fiber diameter of approximately 4- 10 $\mu$m. Subsequently, the fabric was treated with a corona discharge treatment as a hydrophilizing treatment. The treated fabric was then subjected to a thickness adjusting process, in this case a calendering treatment at a temperature of 50 °C, so as to have a thickness of 0.14 mm. A separator 3 in accordance with the present invention was thus prepared. It is noted that an apparent density of the separator 3 thus prepared was 0.40 g/cm$^3$.

Preparation of test cell

As shown in Fig. 1, an electrode assembly 4 was produced by spirally winding the aforementioned positive electrode 1, a non-sintered type nickel electrode, and the aforementioned negative electrode 2, a hydrogen absorbing alloy electrode, with the separator 3 interposed between the electrodes. Thereafter, an electrolyte consisting of 30 % KOH aqueous solution was filled into a cell can 6, and an upper part of the cell can 6 was sealed with a sealing plate 12. In accordance with the manner described thus far, 100 pieces of the cells A1 according to the present invention were prepared.

Example 2

One hundred pieces of the cells A2 according to the present invention were prepared in accordance with the same manner as in Example 1, except that in preparing the separator, the thickness of the separator was adjusted to 0.12 mm by the thickness adjusting process so that the apparent density of the separator results in 0.47 g/cm$^3$.

Example 3

One hundred pieces of the cells A3 according to the present invention were prepared in accordance with the same manner as in Example 1, except that in preparing the separator, the thickness of the separator was adjusted to 0.10 mm by the thickness adjusting process so that the apparent density of the separator results in 0.56 g/cm$^3$.

Example 4

One hundred pieces of the cells A4 according to the present invention were prepared in accordance with the same manner as in Example 1, except that in preparing the separator, the non-woven fabric was made to have a basis weight of 51 g/m$^2$, and the thickness of the separator was adjusted to 0.12 mm by the thickness adjusting process so that the apparent density of the separator results in 0.43 g/cm$^3$.

Example 5

One hundred pieces of the cells A5 according to the present invention were prepared in accordance with the same manner as in Example 1, except that in preparing the separator, the non-woven fabric was made to have a basis weight of 51 g/m$^2$, and the thickness of the separator was adjusted to 0.10 mm by the thickness adjusting process so that the apparent density of the separator results in 0.51 g/cm$^3$.

Example 6

One hundred pieces of the cells A6 according to the present invention were prepared in accordance with the same manner as in Example 1, except that in preparing the separator, the non-woven fabric was made to have a basis weight of 44 g/m$^2$, and the thickness of the separator was adjusted to 0.10 mm by the thickness adjusting process so that the apparent density of the separator results in 0.44 g/cm$^3$.

Example 7

One hundred pieces of the cells A7 according to the present invention were prepared in accordance with the same manner as in Example 1, except that the separator was prepared according to the following manner. First, 70 parts by weight of heat-bonded fibers and 30 parts by weight of polypropylene fibers were mixed together. The heat-bonded fibers had a fiber diameter of approximately 15 μm, and had such a sheath-core structure that polypropylene was a core of the fiber and polyethylene was arrayed on the surface of the core. The polypropylene fibers had a fiber diameter of approximately 10 μm. Subsequently, the mixed fibers were three-dimensionally collected by an ordinary dry method, then made into a sheet shape so that the basis weight became 56 g/m$^2$. Then, the sheet shaped fibers were heated, and the polyethylene, being a polymer resin with a low melting point, was thereby fused, and therefore the contact points of the fibers were thereby thermally fused and bonded together so as to form a non-woven fabric. The thus-prepared non-woven fabric was treated with a corona discharge treatment as a hydrophilizing treatment. The treated fabric was then subjected to a thickness adjusting process at a temperature of 50 °C, so as to have a thickness of 0.14 mm and thereby an apparent density of 0.40 g/cm$^3$.

Comparative Example 1

One hundred pieces of the comparative example cells X1 were prepared in accordance with the same manner as in Example 1, except that in a step of preparing the separator in the above Example 1, the non-woven fabric was made to have a basis weight of 56 g/m$^2$, and the thickness of the separator was adjusted to 0.18 mm by the thickness adjusting process so that the apparent density of the separator results in 0.31 g/cm$^3$.

Comparative Example 2

One hundred pieces of the comparative example cells X2 were prepared in accordance with the same manner as in Example 1, except that in a step of preparing the separator in the above Example 1, the non-woven fabric was made to have a basis weight of 56 g/m$^2$, and the thickness of the separator was adjusted to 0.18 mm by the thickness adjusting process so that the apparent density of the separator results in 0.31 g/cm$^3$, and thereafter the separator was treated with a corona discharge treatment as a hydrophilizing treatment.

Comparative Example 3

One hundred pieces of the comparative example cells X3 were prepared in accordance with the same manner as in Example 1, except that in a step of preparing the separator in the above Example 1, a hydrophilizing treatment was not at all carried out.

Comparative Example 4

One hundred pieces of the comparative example cells X4 were prepared in accordance with the same manner as in Example 1, except that in a step of preparing the separator in the above Example 1, the non-woven fabric was made to have a basis weight of 56 g/m$^2$, and the thickness of the separator was adjusted to 0.14 mm by the thickness adjusting process so that the apparent density of the separator results in 0.40 g/cm$^3$, and thereafter the separator was treated with a corona discharge treatment as a hydrophilizing treatment.

Comparative Example 5

One hundred pieces of the comparative example cells X5 were prepared in accordance with the same manner as in Example 1, except that in a step of preparing the separator in the above Example 1, the non-woven fabric was made to have a basis weight of 56 g/m$^2$, and the thickness of the separator was adjusted to 0.12 mm by the thickness adjusting process so that the apparent density of the separator results in 0.47 g/cm$^3$, and thereafter the separator was treated with a corona discharge treatment as a hydrophilizing treatment.

Comparative Example 6

One hundred pieces of the comparative example cells X6 were prepared in accordance with the same manner as in Example 1, except that in a step of preparing the separator in the above Example 1, the non-woven fabric was made to have a basis weight of 56 g/m$^2$, and the thickness of the separator was adjusted to 0.10 mm by the thickness adjusting process so that the apparent density of the separator results in 0.56 g/cm$^3$, and thereafter the separator was treated with a corona discharge treatment as a hydrophilizing treatment.

Comparative Example 7

One hundred pieces of the comparative example cells X7 were prepared in accordance with the same manner as in Example 1, except that in a step of preparing the separator in the above Example 1, the non-woven fabric was made to have a basis weight of 56 g/m$^2$, and the thickness of the separator was adjusted to 0.14 mm by the thickness adjusting process so that the apparent density of the separator results in 0.40 g/cm$^3$, and thereafter the separator was treated with a corona discharge treatment as a hydrophilizing treatment.

Experiment 1

(1) Evaluation of short circuit resistance characteristic

An insulation resistance was measured under the condition where the electrode assembly was inserted in the cell can. When the measured value was not more than 1.5 kΩ, it was determined as an internal short circuit, and a percentage of the occurrences of the internal short circuit was calculated. The results are shown in the following Table 1.

(2) Measurement of internal pressure of cell

First, each of the cells A1 to A7 and the comparative example cells X1 to X8 prepared in accordance with the above described manner was activated by repeating three times the cycle described below. The cycle was that each of the subjected cells was charged at an electric current of 120 mA for 16 hours, then rested for 1 hour, then discharged at an electric current of 240 mA until a final discharge voltage became 1.0 V, and then rested for 1 hour.

Secondly, each subjected cell after activated as above was charged at an electric current of 1200 mA, and the internal pressure of the subjected cell was measured when 1 hour elapsed. The results are also shown in the following Table 1.

TABLE 1

| Cell | Basis Weight $(g/m^2)$ | Thickness (mm) | Apparent Density $(g/cm^2)$ | Hydrophilizing Treatment | Short Circuit Occurrence Rate (%) | Cell Internal Pressure (Mpa $(kgf/cm^2)$) |
|---|---|---|---|---|---|---|
| A1 | 56 | 0.14 | 0.40 | Before thickness adjusting | 0 | 0.64 (6.5) |
| A2 | 56 | 0.12 | 0.47 | Before thickness adjusting | 0 | 0.72 (7.3) |
| A3 | 56 | 0.10 | 0.56 | Before thickness adjusting | 0 | 0.77 (7.9) |
| A4 | 51 | 0.12 | 0.43 | Before thickness adjusting | 1 | 0.59 (6.0) |
| A5 | 51 | 0.10 | 0.51 | Before thickness adjusting | 1 | 0.69 (7.0) |
| A6 | 44 | 0.10 | 0.44 | Before thickness adjusting | 2 | 0.67 (6.8) |
| A7 | 56 | 0.14 | 0.40 | Before thickness adjusting | 2 | 0.76 (7.8) |
| X1 | 56 | 0.18 | 0.31 | Before thickness adjusting | 5 | 0.71 (7.2) |
| X2 | 56 | 0.18 | 0.31 | After thickness adjusting | 6 | 0.90 (9.2) |
| X3 | 56 | 0.14 | 0.40 | - | 0 | 1.17 (11.9) |
| X4 | 56 | 0.14 | 0.40 | After thickness adjusting | 1 | 0.95 (9.7) |
| X5 | 56 | 0.12 | 0.47 | After thickness adjusting | 0 | 0.94 (9.6) |
| X6 | 56 | 0.10 | 0.56 | After thickness adjusting | 0 | 1.22 (12.4) |
| X7 | 56 | 0.14 | 0.40 | After thickness adjusting | 3 | 0.97 (9.9) |

As seen from Table 1, the cells A1 to A7 according to the present invention, which employed a separator with an apparent density of 0.40 $g/cm^3$ or higher, achieved a short circuit occurrence rate of 2% or lower, while the comparative example cells X1 and X2 which employed a separator with an apparent density of 0.31 g/cm$^3$, showed a short circuit occurrence rate of 5% or higher. The cells which caused a short circuit were disassembled and the cause of the short circuit was analyzed. As a result, it was discovered that a positive electrode substrate had pierced through the separator and had made contact with the negative electrode. From this results, it is considered that a puncture strength of the separator is improved by making an apparent density of the separator 0.40 g/cm$^3$ or higher.

In addition, as for the comparative example cell X3, which was not subjected to a hydrophilizing treatment, and the comparative example cells X4 to X7, which was hydrophilizing-treated prior to the thickness adjusting treatment, they showed relatively low short circuit occurrence rates, but their internal pressure resulted in approximately 0.88 MPa (9 kgf/cm$^2$) or higher, although they have apparent densities of 0.40/cm$^3$ or higher. On the other hand, the cells A1 to A7 according to the present invention, in which the hydrophilizing treatment was carried out prior to the thickness adjusting process, achieved a cell internal pressure of approximately less than 0.785 MPa (8 kgf/cm$^2$). It is considered that, by carrying out the hydrophilizing treatment prior to the thickness adjusting process, the surface of the internal fibers oriented in the thickness direction was sufficiently treated with the hydrophilizing treatment, and thereby an affinity of the separator for the electrolyte was improved, hence improving a gas permeability of the separator.

Furthermore, as for the comparative example cell X4, in which a non-woven fabric containing the split fibers that were divided into 10 μm or less was employed and the hydrophilizing treatment was carried out subsequent to the thickness adjusting process, and the cell X7, in which a non-woven fabric containing no split fibers was employed and the hydrophilizing treatment was carried out subsequent to the thickness adjusting process, they exhibited a cell internal pressure of 0.95 MPa (9.7 kgf/cm$^2$) and 0.97 MPa (9.9 kgf/cm$^2$) respectively. On the other hand, the cells A1 and A7, in which the corresponding non-woven fabric was employed and the hydrophilizing treatment was carried out prior to the thickness adjusting process, achieved a cell internal pressure of 0.64 MPa and 0.765 MPa (6.5 kgf/cm$^2$ and 7.8 kgf/cm)$^2$ respectively, which indicates the effect of reducing a cell internal pressure. In particular, the cell A1, in which split fibers were contained, was proved to be more effective than the cell A7, in which split fibers were not contained. It is considered that the reason is that the effect of an increased fiber surface area by employing split fibers was sufficiently exhibited in the cell A1.

Experiment 2

Four types of the cells A8, A9, A10, and A11 (wherein A9 was according to the present invention) were prepared in accordance with the same manner as in Example 1, with the use of four types of separators, each treated with the thickness adjusting process at a temperature of 25 °C, 70 °C, 90°C, and 100 °C respectively, instead of at 50 °C as in Example 1.

The thus produced cells A8 to A11 of the present invention and the comparative example cells X1 and X4 were subjected to the evaluation test of short circuit resistance characteristic and the measurement of cell internal pressure, both tests conducted under the same conditions as those of Experiment 1. The test results are shown in the following Table 2.

TABLE 2

| Cell | Apparent Density | Hydrophilizing Treatment | Thickness Adjusting Process Temperature (C°) | Short Circuit Occurrence Rate (%) | Cell Internal Pressure (Mpa (Kgf/Cm$^2$) |
|------|------------------|--------------------------|----------------------------------------------|-----------------------------------|------------------------------------------|
| A8 | 0.40 | Before thickness adjusting | 25 | 2 | 0.61 (6.2) |
| A1 | 0.40 | Before thickness | 50 | 0 | 0.64 (6.5) |
| A9 | 0.40 | Before thickness adjusting | 70 | 0 | 0.70 (7.1) |
| A10 | 0.40 | Before thickness adjusting | 90 | 1 | 0.68 (6.9) |
| A11 | 0.40 | Before thickness adjusting | 100 | 3 | 0.72 (7.3) |
| X1 | 0.31 | Before thickness adjusting | 50 | 5 | 0.71 (7.2) |
| X4 | 0.40 | After thickness adjusting | 50 | 1 | 0.95 (9.7) |

As apparent from Table 2, it is preferable that the thickness adjusting process be carried out at a temperature within the range of from 50 °C to 90 °C, so as to notably reduce the short circuit occurrence rate. More preferably, the temperature range should be within the range of 50 °C to 70 °C.

The comparative example cell X1, in which a non-woven fabric containing heat-bonded fibers were treated with the hydrophilizing treatment and thereafter the thickness adjusting process was carried out at 50 °C so that the thickness of the separator results in 0.18 mm (apparent density: 0.31 g/cm$^3$), showed a short circuit occurrence rate of 5%. On the other hand, the cells A1 and A8 to A11 according to the present invention, in which a separator with a thickness of 0.14 mm (apparent density: 0.40 g/cm$^3$) was employed and the thickness adjusting process was carried out at the various temperatures, achieved a short circuit occurrence rate of 3 % or lower. Particularly, the cells A1 and A9 achieved a short circuit occurrence rate of 0 %.

It is considered that a puncture strength of the separator was improved by making an apparent density of the separator 0.40 g/cm$^3$ or higher, and in particular, it was remarkably improved by employing the non-woven fabric containing heat-bonded fibers and carrying out the thickness adjusting process at a temperature of 50 °C to 70 °C.

The comparative example cell X4, in which a non-woven fabric containing heat-bonded fibers was employed, the thickness adjusting process was carried out at 50 °C, and thereafter the separator was treated with the hydrophilizing treatment, exhibited a short circuit occurrence rate of 1 %, but showed a high cell internal pressure of 0.95 Mpa (9.7 kgf/cm$^2$). By contrast, the cell A1 and A8 to A11 according to the present invention achieved low cell internal pressures of approximately from 0.59 - 0.69MPa (6 to 7 kgf/cm$^2$). It is considered that, by carrying out the hydrophilizing treatment prior to the thickness adjusting process, the surface of the internal fibers oriented in the thickness direction was sufficiently treated with the hydrophilizing treatment, and thereby an affinity of the separator for the electrolyte was improved, hence improving a gas permeability of the separator.

<u>Supplementary Notes</u>

(1) In the above examples, a current collector is provided at the base part of the cell can since the outermost periphery of the electrode assembly was made to be the separator, but the construction of the cell according to the present invention is not limited thereto, and a cell construction in which a negative electrode at the outermost periphery of the electrode assembly is directly contacted with the cell can may be employed. In the case of a cell having such a construction, the separator at the outermost periphery is made unnecessary, and therefore the technique is effective to increase the cell capacity whereby the occupied volume of the corresponding separator can be replaced with a positive and negative electrode plates. However, according to this construction, the volume of the separator serving as an electrolyte retainer is also made smaller, and thereby the cell is susceptible to causing an electrolyte excess and a poor gas permeability when the cell has the same amount of electrolyte. For this reason, it is expected that an effect of suppressing increase in the cell internal pressure achievable by the present invention be satisfactorily exhibited for such a cell having a construction in which a negative electrode at the outermost periphery of the electrode assembly is directly contacted with the cell can,

(2) The present invention is not limited to the nickel-hydrogen storage cell as in the examples, but, naturally, applicable to other alkali cells such as a nickel-cadmium storage cell, a nickel-zinc storage cell, and the like.

(3) Among the examples of the types of hydrogen-absorbing alloys usable for the cell according to the present invention are, a Zr-Ni based hydrogen absorbing alloy such as ZrNi, Ti-Fe based hydrogen absorbing alloy such as TiFe, Zr-Mn based hydrogen absorbing alloy such as ZrMn$_2$, Ti-Mn based hydrogen absorbing alloy such as TiMn$_{1.5}$, Mg-Ni based hydrogen-absorbing alloy such as Mg$_2$Ni, and the like.

(4) A hydrogen absorbing alloy having a CaCu$_5$ type crystal structure, which is particularly preferable for a metal hydride storage cell, is represented by the general formula MmNi$_a$Co$_b$Al$_c$Mn$_d$, where a>0, b>0, c>0, d≧0, and 4,4≦a+b+c+d≦5,4. In this formula; Mm is a mixture of the rare-earth elements selected from the group consisting of La, Ce, Pr, Nd, Sm, Eu, Sc, Y, Pm, Gd, Tb, Gy, Ho, Er, Tm, Yb, and Lu. Particularly preferred is a Mm mainly consisted of a mixture of La, Ce, Pr, Nd, and Sm.

The hydrogen-absorbing alloy according to the above composition is capable of achieving the basic characteristics required for an alkaline secondary battery such as a cycle characteristic and discharge characteristic to a satisfactory degree. Additionally, it is noted that Si, C, W, and B may be added within the range in which those elements do not affect a hydrogen storage characteristic of the hydrogen absorbing alloy.

Furthermore, it is preferable to restrict the amount of nickel (a) within 2.8≦a≦5.2, the amount of cobalt (b) within 0<b≦1.4, the amount of aluminum (c) within 0<c≦1.2, and the amount of manganese (d) within d≦1,2, in the above general formula. In order to increase a cell capacity, it is preferable that the amount of aluminum (c) be c≦1.0, and the amount of manganese (d) be d≦1.0.

Although the present invention and its advantages have been described in detail, it should be understood that various changes, substitutions, and alterations can be made herein without departing from the scope of the invention as defined by the appended claims.

**Claims**

1. A method of manufacturing an alkali storage cell comprising a separator in which a non-woven fabric composed of fibers consisting essentially of a polyolefin resin is treated with a hydrophilizing treatment, comprising the steps of:

   treating said nonwoven fabric with a hydrophilizing treatment; and
   adjusting a thickness of said non-woven fabric at a temperature in the range 50 °C to 70 ° C after said step of treating said non-woven fabric with a hydrophilizing treatment so that an apparent density of said separator represented by the following expression

$$\text{Apparent density} = \text{Separator basis weight} \div \text{Separator thickness,}$$

   results in not less than $0.40 \text{g/cm}^3$.

2. A method of manufacturing an alkali storage cell according to claim 1, in which said split fibers are composed of a splittable conjugate fiber in which two types of polymer resins are radially arranged.

3. A method of manufacturing an alkali storage cell according to claim 1, in which said step of treating said non-woven fabric with a hydrophilizing treatment comprises a step of treating said non-woven fabric with a corona discharge treatment.

4. A method of manufacturing an alkali storage cell according to claim 1, in which a positive electrode is composed of a nickel electrode, and the negative electrode is selected from a group consisting of a hydrogen storage alloy electrode, a cadmium electrode, and a zinc electrode.

5. A method of manufacturing an alkali storage cell according to claim 1, in which hydrogen-absorbing alloy powder in a hydrogen storage alloy electrode is selected from the group consisting of rare-earth element based hydrogen-absorbing alloy powder, Zr-Ni based hydrogen-absorbing alloy powder, Ti-Fe based hydrogen-absorbing alloy powder, Zr-Mn based hydrogen-absorbing alloy powder, Ti-Mn based hydrogen-absorbing alloy powder, and Mg-Ni based hydrogen-absorbing alloy powder.

6. A method of manufacturing an alkali storage cell according to claim 1, in which hydrogen-absorbing alloy powder in a hydrogen storage alloy electrode comprises a hydrogen-absorbing alloy having a $CaCu_5$ type crystal structure expressed by the general formula $MmNi_aCo_bAl_cMn_d$, where a>0, b>0, c>0 d$\geqq$0, and 4.4$\leqq$a+b+c+d$\leqq$ 5.4.

7. A method of manufacturing an alkali storage cell according to claim 1, further comprising a step of treating said nonwoven fabric with a water jet entanglement prior to said step of treating said nonwoven fabric with a hydrophilizing treatment, said method in which said fibers comprise at least two types of fibers and at least one type of said fibers comprises split fibers with a fiber diameter after said water jet entanglement being not more than 10 $\mu$m.

**Patentansprüche**

1. Verfahren zur Herstellung einer Alkali-Speicherzelle, umfassend einen Separator, bei dem ein nicht gewebtes Textilmaterial, das aus Fasern aufgebaut ist, die im Wesentlichen aus einem Polyolefinharz bestehen, mit einer Hydrophilierungs-Behandlung behandelt wird, umfassend die folgenden Schritte:

   Behandeln des nicht gewebten Textilmaterials mit einer Hydrophilierungs-Behandlung; und
   Einstellen einer Dicke des nicht gewebten Textilmaterials bei einer Temperatur im Bereich von 50 °C bis 70 °C nach dem Schritt des Behandelns des nicht gewebten Textilmaterials mit einer Hydrophilierungsbehandlung, so dass eine scheinbare Dichte des Separators, repräsentiert durch die folgende Gleichung

$$\text{scheinbare Dichte} = \text{Separatorgrundgewicht} \div \text{Separatordicke,}$$

nicht weniger als 0,40 g/cm$^3$ ergibt.

**2.** Verfahren zur Herstellung einer Alkali-Speicherzelle nach Anspruch 1, wobei die Spaltfasem aus einer spaltbaren konjugierten Faser gebildet werden, in welcher zwei Typen von Polymerharzen radial angeordnet sind.

**3.** Verfahren zur Herstellung einer Alkali-Speicherzelle nach Anspruch 1, wobei der Schritt der Behandlung des nicht gewebten Textilmaterials mit einer Hydrophilierungsbehandlung einen Schritt des Behandelns des nicht gewebten Textilmaterials mit einer Koronaentladungsbehandlung umfasst.

**4.** Verfahren zur Herstellung einer Alkali-Speicherzelle nach Anspruch 1, wobei eine positive Elektrode aus einer Nickelelektrode gebildet wird und die negative Elektrode aus einer Gruppe ausgewählt ist, die aus einer Wasserstoffspeicherlegierungselektrode, einer Cadmiumelektrode und einer Zinkelektrode besteht.

**5.** Verfahren zur Herstellung einer Alkali-Speicherzelle nach Anspruch 1, wobei ein Wasserstoff absorbierendes Legierungspulver in einer Wasserstoffspeicherlegierungselektrode aus der Gruppe ausgewählt ist, die aus auf Seltenerdelementen beruhendem Wasserstoff absorbierendem Legierungspulver, auf Zr-Ni beruhendem Wasserstoff absorbierendem Legierungspulver, auf Ti-Fe beruhendem Wasserstoff absorbierendem Legierungspulver, auf Zr-Mn beruhendem Wasserstoff absorbierendem Legierungspulver, auf Ti-Mn beruhendem Wasserstoff absorbierendem Legierungspulver und auf Mg-Ni beruhendem Wasserstoff absorbierendem Legierungspulver besteht.

**6.** Verfahren zur Herstellung einer Alkali-Speicherzelle nach Anspruch 1, wobei ein Wasserstoff absorbierendes Legierungspulver in einer Wasserstoffspeicherlegierungselektrode ein Wasserstoff absorbierendes Legierungspulver umfasst, das eine Kristallstruktur vom CaCu$_5$-Typ aufweist und durch die allgemeine Formel MmNi$_a$Co$_b$Al$_c$Mn$_d$ ausgedrückt wird, wobei a > 0, b > 0, c > 0, d $\geq$ 0 und 4,4 $\leq$ a + b + c + d $\leq$ 5,4 ist.

**7.** Verfahren zur Herstellung einer Alkali-Speicherzelle nach Anspruch 1, das darüber hinaus einen Schritt der Behandlung des nicht gewebten Textilmaterials mit einer Wasserstrahl-Verfilzung vor dem Schritt der Behandlung des nicht gewebten Textilmaterials mit einer Hydrophilierungsbehandlung, wobei bei dem Verfahren die Fasern wenigstens zwei Typen von Fasern umfassen und wenigstens ein Typ der Fasern Splitfasern umfasst, wobei ein Faserdurchmesser nach der Wasserstrahl-Verfilzung nicht größer als 10 $\mu$m ist.

**Revendications**

**1.** Procédé de fabrication d'un accumulateur alcalin comprenant un séparateur dans lequel un textile non-tissé composé de fibres constituées essentiellement d'une résine polyoléfine est traité avec un traitement d'hydrophilisation, comprenant les étapes consistant à :

traiter ledit textile non-tissé avec un traitement d'hydrophilisation ; et
ajuster l'épaisseur dudit textile non-tissé à une température dans la plage de 50 °C à 70 °C après ladite étape de traitement dudit textile non-tissé avec un traitement d'hydrophilisation de sorte que la densité apparente dudit séparateur représentée par l'expression suivante

$$\text{Densité apparente} = \text{Poids de base du séparateur} \div \text{Epaisseur du séparateur}$$

résulte en pas moins de 0,40 g/cm$^3$.

**2.** Procédé de fabrication d'un accumulateur alcalin selon la revendication 1, dans lequel lesdites fibres refendues sont composées d'une fibre conjuguée divisible dans laquelle deux types de résines de polymère sont radialement agencés.

**3.** Procédé de fabrication d'un accumulateur alcalin selon la revendication 1, dans lequel ladite étape de traitement dudit textile non-tissé avec un traitement d'hydrophilisation comprend une étape de traitement dudit textile non-tissé avec un traitement de décharge corona.

**4.** Procédé de fabrication d'un accumulateur alcalin selon la revendication 1, dans lequel une électrode positive est composée d'une électrode en nickel, et l'électrode négative est choisie dans le groupe constitué d'une électrode en alliage de stockage à hydrogène, une électrode en cadmium, et une électrode en zinc.

5. procédé de fabrication d'un accumulateur alcalin selon la revendication 1, dans lequel la poudre d'alliage absorbant l'hydrogène dans une électrode en alliage de stockage à hydrogène est choisie dans le groupe constitué d'une poudre d'alliage absorbant l'hydrogène à base d'élément terre rare, une poudre d'alliage absorbant l'hydrogène à base de Zr-Ni, une poudre d'alliage absorbant l'hydrogène à base de Ti-Fe, une poudre d'alliage absorbant l'hydrogène à base de Zr-Mn, une poudre d'alliage absorbant l'hydrogène à base de Ti-Mn, et une poudre d'alliage absorbant l'hydrogène à base de Mg-Ni.

6. Procédé de fabrication d'un accumulateur alcalin selon la revendication 1, dans lequel la poudre d'alliage absorbant l'hydrogène dans une électrode en alliage de stockage à hydrogène comprend un alliage absorbant l'hydrogène ayant une structure cristalline de type $CaCu_5$ exprimée par la formule générale $MmNi_aCo_bAl_cMn_d$, où a>0, b>0, c>à, d≥0, et 4,4 ≤a+b+c+d≤ 5,4.

7. Procédé de fabrication d'un accumulateur alcalin selon la revendication 1, comprenant en outre une étape de traitement dudit textile non-tissé avec un enchevêtrement par jet d'eau avant ladite étape de traitement dudit textile non-tissé avec un traitement d'hydrophilisation, ledit procédé dans lequel lesdites fibres comprennent au moins deux types de fibres et au moins un type desdites fibres comprend des fibres refendues avec un diamètre de fibre après ledit enchevêtrement par jet d'eau étant de pas plus de 10 $\mu$m.

# FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7029562 A